# EUROPEAN PATENT APPLICATION

(11) **EP 4 216 360 A1**
(43) Date of publication of application: **26.07.2023**
(21) Application number: 22756388.9
(22) Date of filing: 21.01.2022
(51) Int. Cl.: H01M 50/533, H01M 10/04

(54) **ELECTRODE TAB, ELECTRODE ASSEMBLY AND SECONDARY BATTERY COMPRISING SAME**

(30) Priority: 17.02.2021 KR 20210021387
(71) Applicant: LG Energy Solution, Ltd., Seoul 07335 (KR)
(72) Inventor: KIM, Byeong Kyu, Daejeon 34122 (KR); KIM, Hyoung Kwon, Daejeon 34122 (KR)
(74) Representative: Goddar, Heinz J.
(86) International application number: PCT/KR2022/001129
(87) International publication number: WO 2022/177184

(57) **Abstract**

The present invention relates to an electrode tab, an electrode assembly, and a secondary battery including the same, and more particularly, to an electrode tab, which is adjusted in thickness to variously adjust durability thereof against heat or vibration, thereby improving performance and safety of the battery, an electrode assembly, and a secondary battery including the same.

An electrode assembly according to the present invention includes a positive electrode plate coated with a positive electrode active material on a collector, a negative electrode plate coated with a negative electrode active material on the collector, a separator interposed between the positive electrode plate and the negative electrode plat, and an electrode tab connected to the positive electrode plate and the negative electrode plate and formed by stacking a plurality of metal plates.

## Description

### CROSS-REFERENCE TO RELATED APPLICATION

The present application claims the benefit of the priority of Korean Patent Application No. 10-2021-0021387, filed on February 17, 2021, which is hereby incorporated by reference in its entirety.

### TECHNICAL FIELD

The present invention relates to an electrode tab, an electrode assembly, and a secondary battery including the same, and more particularly, to an electrode tab, which is adjusted in thickness to variously adjust durability thereof against heat or vibration, thereby improving performance and safety of the battery, an electrode assembly, and a secondary battery including the same.

### BACKGROUND ART

A secondary battery is a chargeable and dischargeable battery unlike a primary battery that is not chargeable. The secondary battery is widely used not only in small electronic devices such as mobile phones and laptops, but also in large products requiring high output such as electric vehicles, power storage devices that store surplus power or renewable energy, and power storage devices for backup.

Such a secondary battery is classified into a cylindrical battery or a prismatic battery in which an electrode assembly is built in a cylindrical or prismatic metal can and a pouch type battery in which an electrode assembly is built in a pouch type case provided as an aluminum lamination sheet.

In addition, a secondary battery is a chargeable and dischargeable power generator and is classified according to an electrode assembly having a positive electrode/separator/negative electrode structure. Representatively, exemplary examples of the electrode assembly may include a jelly-roll type (winding type) electrode assembly in which long sheet-shaped positive electrodes and negative electrodes are wound with a separator therebetween, a stack type (stacking type) electrode assembly in which a plurality of positive electrodes and negative electrodes, which are cut into units, each of which has a predetermined size, are sequentially stacked with a separator therebetween, a stack-folding type electrode assembly in which bi-cells or full cells, which are stacked with a separator therebetween, are wound, and the like. Among them, since the jelly-roll type electrode assembly has advantages of being easy to be manufactured and high energy density per weight, the jelly-roll type electrode assembly is being widely used as an electrode assembly mounted in a cylindrical battery case.

In the cylindrical secondary battery, the jelly-roll type electrode assembly is accommodated in a battery case made of a metal can material with an opened upper side, and a cap assembly covers the opened upper side of the battery case. The jelly-roll type electrode assembly accommodated in the battery case is provided with positive and negative electrode tabs (hereinafter, referred to as 'electrode tabs') attached to positive and negative electrodes to protrude upward and downward of the jelly-roll type electrode assembly.

On the other hand, when vibration occurs in the cylindrical secondary battery, the electrode assembly vibrates in an inner space of the battery case while being accommodated inside the battery case, and in this case, the electrode tab is cut by the vibration. This problem occurs more frequently when the cylindrical secondary battery is used as a power source for a device that is frequently exposed to strong vibrations such as power tools, or when being exposed to unexpected external shocks such as drops. In addition, when performing high rate discharge, large current is applied, and thus, high heat is generated in the electrode tab to cause disconnection of the electrode tab. As a result, it is impossible to maintain performance of the battery.

Accordingly, there is a need to develop an electrode tab, which is capable of securing battery safety and maintaining performance as necessary by appropriately adjusting durability of the electrode tab, an electrode assembly, and a secondary battery including the same.

### DISCLOSURE OF THE INVENTION

### TECHNICAL PROBLEM

The present invention has been devised to solve the above problems, and an object of the present invention is to provide an electrode tab, which is adjusted in thickness to variously adjust durability thereof against heat or vibration, thereby improving performance and safety of the battery, an electrode assembly, and a secondary battery including the same.

### TECHNICAL SOLUTION

An electrode assembly according to the present invention includes a positive electrode plate coated with a positive electrode active material on a collector, a negative electrode plate coated with a negative electrode active material on a collector, a separator interposed between the positive electrode plate and the negative electrode plate, and an electrode tab connected to the positive electrode plate and the negative electrode plate and formed by stacking a plurality of metal plates.

The electrode tab may be formed by stacking a plurality of metal plates having the same length.

The electrode tab may be formed by stacking a plurality of metal plate having different length, wherein one side of the electrode tab may have a thickness greater than that of the other side of the electrode tab.

The metal plates may include a first metal plate having a length and a second metal plate stacked on the first metal plate and having a length less than that of the first metal plate.

The length of the second metal plate may be less than 1/2 of the length of the first metal plate.

The metal plates may further include a third metal plate stacked on the second metal plate and having a length less than or equal to that of the second metal plate.

In the electrode tab, the plurality of metal plates having the different lengths may be disposed so that ends of the metal plates match each other at one side of the electrode tab.

One side of the electrode tab, which has a relatively thick thickness, may be connected to the positive electrode plate or the negative electrode plate.

The other side of the electrode tab, which has a relatively thin thickness, may be connected to the positive electrode plate or the negative electrode plate.

An electrode tab according to the present invention is connected to a positive electrode plate or a negative electrode plate and formed by stacking a plurality of metal plates.

The plurality of metal plates may have the same length.

The plurality of metal plates may have different lengths, wherein one side of each of the metal plates may have a length greater than that of the other side thereof.

A secondary battery according to the present invention includes an electrode assembly including a positive electrode plate coated with a positive electrode active material on a collector, a negative electrode plate coated with a negative electrode active material on the collector, a separator interposed between the positive electrode plate and the negative electrode plat, and an electrode tab connected to the positive electrode plate and the negative electrode plate and formed by stacking a plurality of metal plates, a battery case configured to accommodate the electrode assembly therein; and a cap assembly coupled to an upper portion of the battery case.

### ADVANTAGEOUS EFFECTS

The electrode assembly according to the present invention may include the positive electrode plate coated with the positive electrode active material on the collector, negative electrode plate coated with the negative electrode active material on the collector, the separator interposed between the positive electrode plate and the negative electrode plate, and the electrode tab connected to the positive electrode plate or the negative electrode plate and formed by stacking the plurality of metal plates, and thus, the electrode tab may be adjusted in thickness to variously adjust the durability of the electrode tab against the heat or vibration, thereby improving the performance and safety of the battery.

### BRIEF DESCRIPTION OF THE DRAWINGS

FIG. 1 is a perspective view illustrating a state in which an electrode tab formed by stacking a plurality of metal plates having the same length is connected to a positive electrode plate or a negative electrode plate in an electrode assembly according to Embodiment 1 of the present invention.
FIG. 2 is a perspective view illustrating a state in which one side of the electrode tab having a relatively thick thickness is connected to the positive electrode plate or the negative electrode plate in the electrode assembly according to Embodiment 1 of the present invention.
FIG. 3 is a perspective view illustrating a state in which the other side of the electrode tab having a relatively thin thickness is connected to the positive electrode plate or the negative electrode plate in the electrode assembly according to Embodiment 1 of the present invention.
FIG. 4 is a side view illustrating a shape of an electrode tab according to Embodiment 2 of the present invention, wherein FIG. 4(a) is a side view illustrating an electrode tab formed by stacking a plurality of metal plates having the same length, and FIG. 4(b) is a side view illustrating an electrode tab formed by stacking a plurality of metal plates having lengths different from each other.
FIG. 5 is an exploded perspective view of a secondary battery according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

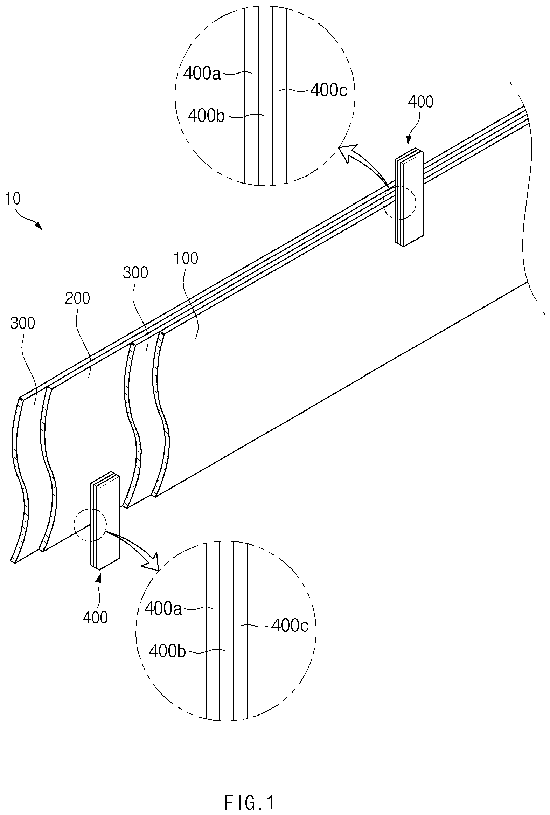

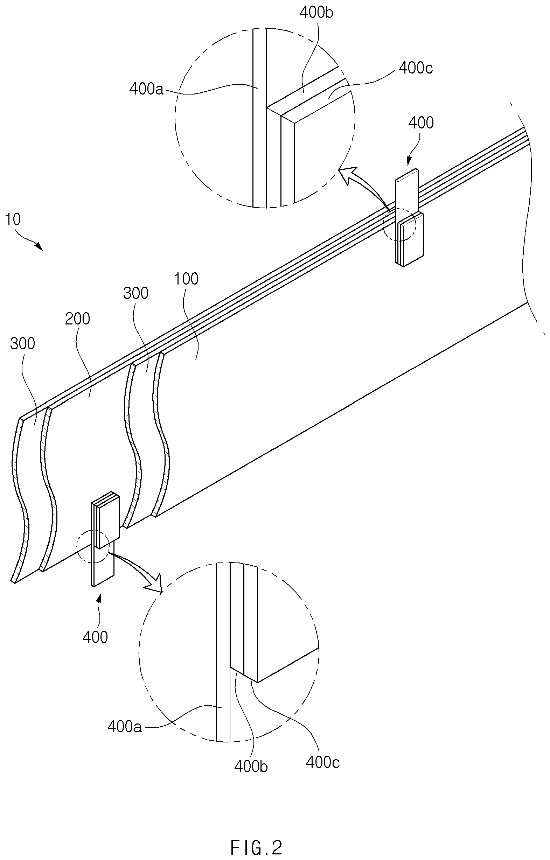

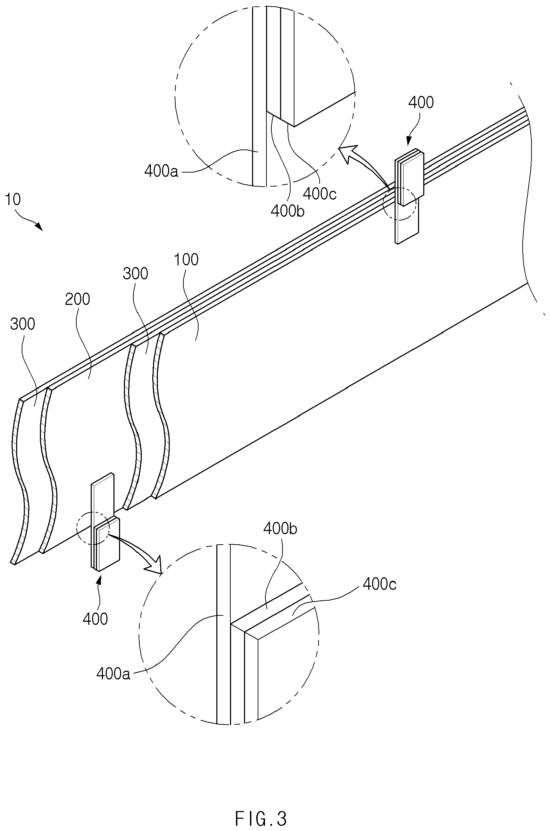

FIG. 1 is a perspective view illustrating a state in which an electrode tab formed by stacking a plurality of metal plates having the same length is connected to a positive electrode plate or a negative electrode plate in an electrode assembly according to Embodiment 1 of the present invention. FIG. 2 is a perspective view illustrating a state in which one side of the electrode tab having a relatively thick thickness is connected to the positive electrode plate or the negative electrode plate in the electrode assembly according to Embodiment 1 of the present invention. FIG. 3 is a perspective view illustrating a state in which the other side of the electrode tab having a relatively thin thickness is connected to the positive electrode plate or the negative electrode plate in the electrode assembly according to Embodiment 1 of the present invention.

Referring to FIGS. 1 to 3, an electrode assembly 10 according to Embodiment 1 of the present invention includes a positive electrode plate 100, a negative electrode plate 200, a separator 300, and an electrode tab 400.

First, referring to FIG. 1, the positive electrode plate 100 may be coated with a positive electrode active material on a positive electrode collector, and the positive electrode collector is coated with the positive electrode active material on both surfaces of the positive electrode collector made of a metal thin plate having excellent conductivity, for example, aluminum (Al) foil. That is, a positive electrode active material may include lithium cobalt oxide having a high operating voltage and excellent capacity characteristics, lithium nickel oxide having a high reversible capacity and easy implementation of large-capacity batteries, lithium nickel cobalt oxide in which a portion of nickel is substituted with cobalt, lithium nickel cobalt metal oxide in which a portion of nickel is substituted with manganese, cobalt or aluminum, low-cost lithium manganese oxide having excellent thermal stability, lithium iron phosphate having excellent stability, and the like.

The negative electrode plate 200 may be coated with a negative electrode active material on a negative electrode collector, and the negative electrode collector may include a negative electrode collector made of a metal thin plate having excellent conductivity, for example, copper (Cu) or nickel (Ni) foil and a negative electrode active material layer applied on both surfaces of the negative electrode collector. The negative electrode active material may be, for example, a carbon material such as crystalline carbon, amorphous carbon, a carbon composite, and a carbon fiber, a lithium metal, or a lithium alloy.

An area of the collector on which the active material layer is not formed may be an non-coating portion (not shown) and refer to an area on which the positive or negative electrode collector is exposed. An electrode tab 400, which will be described later, may be connected to the non-coating portion and may be withdrawn out by a predetermined length to an upper or lower side of the electrode assembly 10. The electrode tab 400 may be divided into a positive electrode tab connected to the non-coating portion of the positive electrode collector and a negative electrode tab connected to the non-coating portion of the negative electrode collector, which are respectively withdrawn by a predetermined distance from the upper and lower sides of the electrode assembly 10.

In the electrode assembly 10, the positive electrode plate 100 and the negative electrode plate 200 have to be in close contact with each other to minimize internal resistance, but when the positive electrode plate 100 and the negative electrode plate 200 are in direct contact with each other, internal short circuit occurs so as not to function as the battery. As a result, the electrode assembly 10 include the separator 300 interposed between the positive electrode plate 100 and the negative electrode plate 200 to prevent the short circuit from occurring. The separator 300 may be disposed between the positive electrode and the negative electrode with certain mechanical strength and be made of porous material to facilitate movement of ions between the electrodes, for example, made of any one base material selected from the group consisting of polyethylene (PE), polystyrene (PS), and copolymer of polyethylene (PE) and polypropylene (PP).

The electrode tab 400 according to Embodiment 1 of the present invention is connected to the positive electrode plate 100 or the negative electrode plate 200 and is formed by stacking a plurality of metal plates 400a, 400b, and 400c. Here, each of the metal plates 400a, 400b, and 400c is made of a conductive metal material. For example, the positive electrode tab may be made of aluminum (Al) or an aluminum alloy, and the negative electrode tab may be made of nickel (Ni), copper (Cu), or a nickel alloy. In addition, each of the positive electrode tab and the negative electrode tab may be made of various other materials. The plurality of metal plates 400a, 400b, and 400c may be stacked to be bonded to each other by welding or a conductive adhesive and also may be stacked together with metal plates made of the same material or different materials.

As described above, in Embodiment 1 of the present invention, the electrode tab 400 may be variously adjusted in thickness to enhance the durability of the electrode tab 400 against the heat or vibration and prevent the electrode tab 400 from being disconnected, thereby improving the performance of the battery. That is, a plurality of metal plates having a specific standard, which are manufactured and used according to the related art, may be stacked to form the electrode tab 400 to easily adjust the thickness of the electrode tab 400 as necessary. For example, when the plurality of thin metal plates may be stacked to manufacture an electrode tab having an overall thick thickness, the electrode tab 400 may decrease in resistance, and an amount of heat generated by the electrode tab 400 may be reduced. As a result, the resultant electrode tab 400 may be maintained in performance of the battery even at high rate current and thus may be applied to a high output model. In addition, the thickness of the electrode tab 400 may be easily adjusted by adding only a device for performing the stacking or bonding process without changing or replacing the existing equipment for manufacturing the metal plate used the electrode tab 400, thereby securing economic efficiency and productivity in the manufacturing process.

As illustrated in FIG. 1, the electrode tab 400 according to Embodiment 1 of the present invention may be formed by stacking the plurality of metal plates 400a, 400b, and 400c having the same length. In this case, the electrode tab 400 may be enhanced in durability against the vibration when compared to the single-layered electrode having the same thickness and thus may be maintained in performance of the battery even when used in the environment exposed to the vibration. In addition, when the plurality of thin metal plates 400a, 400b, and 400c are stacked to form the electrode tab 400 having the thick thickness, the amount of heat to be generated may decrease due to the reduction of the resistance. As a result, there is an advantage of excellent manufacturability when compared to the stacking method of electrode tab 400 including the metal plates having different lengths, which will be described later.

As described above, when the electrode tab 400 increases in thickness, heat resistance and vibration resistance may be enhanced. However, in some cases, it is necessary to secure safety of the battery by cutting the electrode tab 400 when the vibration and heat having certain intensity or more are generated. That is, it is necessary to appropriately vary in durability of the electrode tab 400 according to the type, structure, use, and capacity of the battery.

Thus, the electrode tab 400 according to Embodiment 1 of the present invention may be formed by stacking the plurality of metal plates 400a, 400b, and 400c having different lengths as illustrated in FIGS. 2 and 3, and the thickness of the one side of the electrode tab 400 may be formed to be thicker than that of the other side of the electrode tab 400. That is, since the metal plate having the relatively short length is stacked at one side of an upper portion of the metal plate having the relatively long length, the one side of the electrode tab 400 may have a relatively thick thickness to enhance heat resistance and vibration resistance properties. Conversely, the other side of the electrode tab 400 may have a relatively thin thickness to weaken the durability so that the electrode tab 400 is easily cut, and as a result, the safety of the battery may be secured.

Specifically, the metal plate stacked on the electrode tab 400 according to Embodiment 1 of the present invention may include a first metal plate 400a and a second metal plate 400b. The first metal plate 400a may be formed to have a length, and the second metal plate 400b may be stacked on an upper portion of the first metal plate 400a and be formed to have a length less than that of the first metal plate 400a. As described above, since the first metal plate 400a and the second metal plate 400b, which have different lengths, the area on which the second metal plate 400b is disposed may be enhanced in durability against the vibration and heat, but the area on which the second metal plate 400b is not disposed may be weakened in durability against the vibration and heat and thus be disconnected under appropriate vibration and heat generation conditions to secure the safety of the battery.

Also, the second metal plate 400b may be formed to be shorter than 1/2 of the length of the first metal plate 400a. Thus, if necessary, the effect of weakening the durability of the other side of the electrode tab 400 may be maximized.

The metal plate may further include a third metal plate 400c stacked on the second metal plate 400b and having a length less than or equal to that of the second metal plate 400b. Thus, the one side of the electrode tab 400 may have a thinker thickness to maximize the effect of strengthening the durability at the one side of the electrode tab 400.

The plurality of metal plates 400a, 400b, and 400c having different lengths may be disposed so that ends of the metal plates 400a, 400b, and 400c match each other at the one side of the electrode tab 400. For example, when the electrode tab 400 includes the first metal plate 400a, the second metal plate 400b, and the third metal plate 400c, the ends of the first metal plate 400a, the second metal plate 400b, and the third metal plate 400c are disposed to match each other at the one side of the electrode tab 400, and simultaneously, a stepped portion may be formed at the other side of the electrode tab 400. As described above, when the ends of the plurality of metal plates 400a, 400b, and 400c are disposed to match each other at the one side of the electrode tab 400, the structure of the electrode tab 400 may be stably maintained to prevent the plurality of metal plates 400a, 400b, and 400c, which are bonded to each other, from being separated from each other, thereby minimizing deformation of the stack type electrode tab 400.

Referring to FIG. 2, one side of the electrode tab 400, which has the relatively thick thickness, may be connected to the positive electrode plate 100 or the negative electrode plate 200. In this case, since the other side of the electrode tab 400, which has the relatively thin thickness, is coupled to the cap assembly 30, when the vibration or high rate current is applied, the electrode tab 400 may be easily disconnected by the generated heat to secure the safety of the battery.

On the other hand, as illustrated in FIG. 3, the other side of the electrode tab 400, which has the relatively thin thickness, may be connected to the positive electrode plate 100 or the negative electrode plate 200. In this case, since the one side of the electrode tab 400, which has the relatively thick thickness, is attached and connected to the cap assembly 30 and the battery case 20, the heat resistance or vibration resistance properties may be enhanced to suppress the disconnection of the electrode tab 400 from the cap assembly 30 or the battery case 20 due to the vibration or heat of the battery case 20.

### Embodiment 2

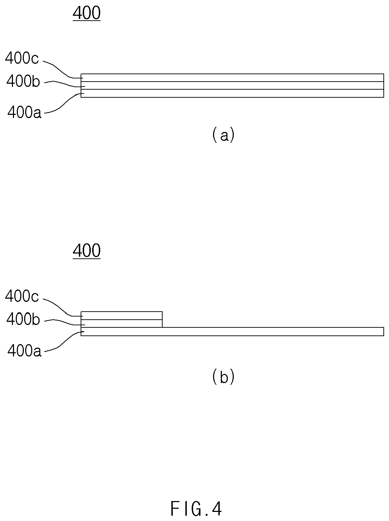

FIG. 4 is a side view illustrating a shape of an electrode tab according to Embodiment 2 of the present invention, wherein FIG. 4(a) is a side view illustrating an electrode tab formed by stacking a plurality of metal plates having the same length, and FIG. 4(b) is a side view illustrating an electrode tab formed by stacking a plurality of metal plates having lengths different from each other.

Embodiment 2 of the present invention is different from Embodiment 1 in that it is an electrode tab 400 used in the electrode assembly according to Embodiment 1.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIG. 4, an electrode tab 400 according to Embodiment 2 of the present invention is connected to a positive electrode plate or a negative electrode plate and is formed by stacking a plurality of metal plates 400a, 400b, and 400c. Thus, as necessary, the electrode tab 400 may be adjusted in thickness to variously adjust durability of the electrode tab 400 against heat or vibration, thereby improving performance and safety of the battery.

In the electrode tab 400 according to Embodiment 2 of the present invention, a plurality of metal plates 400a, 400b, and 400c may have the same length. In this case, the electrode tab 400 may be enhanced in durability against the vibration when compared to the single-layered electrode having the same thickness and thus may be maintained in performance of the battery even when used in the environment exposed to the vibration. In addition, when the thickness of the electrode tab 400 is formed to be thick, an amount of heat to be generated may be reduced due to a decrease in resistance to improve manufacturability when compared to a stacking method of the electrode tab 400 including the metal plates having different lengths.

In the electrode tab 400 according to Embodiment 2 of the present invention, the plurality of metal plates 400a, 400b, and 400c may have different lengths, and thus, the thickness of the electrode tab 400 at one side thereof may be thicker than that of the electrode tab 400 at the other side thereof. That is, since the metal plate having the relatively short length is stacked at one side of an upper portion of the metal plate having the relatively long length, the one side of the electrode tab 400 may have a relatively thick thickness to enhance heat resistance and vibration resistance properties. Conversely, the other side of the electrode tab 400 may have a relatively thin thickness to weaken the durability, thereby securing the safety of the battery.

### Embodiment 3

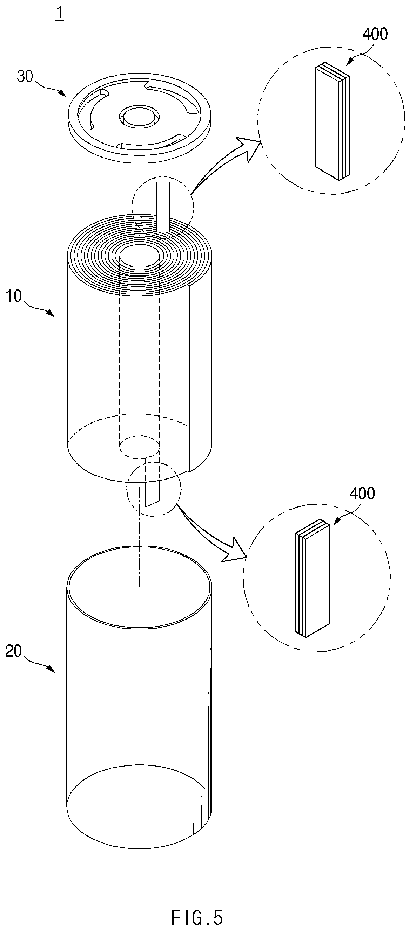

FIG. 5 is an exploded perspective view of a secondary battery according to Embodiment 3 of the present invention.

Example 3 of the present invention is different from Example 1 in that it is a secondary battery 1 including the electrode assembly 10 according to Example 1.

The contents that are duplicated with Embodiment 1 will be omitted as much as possible, and Embodiment 3 will be described with a focus on the differences. That is, it is obvious that the contents that are not described in Embodiment 3 may be regarded as the contents of Embodiment 1 if necessary.

Referring to FIG. 5, a secondary battery 1 according to Embodiment 3 of the present invention includes an electrode assembly 10, a battery case 20, and a cap assembly 30.

The electrode assembly 10 may include a positive electrode coated with a positive electrode active material on a collector, a negative electrode plate coated with a negative electrode active material on the collector, a separator interposed between the positive electrode plate and the negative electrode plate, and an electrode tab 400 connected to the positive electrode plate and the negative electrode plate and formed by stacking a plurality of metal plates and may be inserted into a wound jelly-roll type battery case 20 to be described later. Configurations related to the positive electrode plate, the negative electrode plate, the separator, and the electrode tab may be understood as being the same as those described in Embodiment 1.

The battery case 20 may accommodate the electrode assembly 10 therein and may be made of stainless steel, aluminum (Al), and the like, but is not necessarily limited thereto. The battery case 20 may be made of a material that accommodates the electrode assembly 10 and an electrolyte, has low reactivity, and is capable of being protected from an external impact.

The cap assembly 30 may include a circuit board and an insulating gasket and may be coupled to an upper portion of the battery case 20 to seal the inside of the battery case 20.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

- 1:: Secondary battery
- 10:: Electrode assembly
- 100:: Positive electrode plate
- 200:: Negative electrode plate
- 300:: Separator
- 400:: Electrode tab
- 400a:: First metal plate
- 400b:: Second metal plate
- 400c:: Third metal plate
- 20:: Battery case
- 30:: Cap assembly

## Claims

1. An electrode assembly comprising:
a positive electrode plate coated with a positive electrode active material on a collector;
a negative electrode plate coated with a negative electrode active material on a collector;
a separator interposed between the positive electrode plate and the negative electrode plate; and
an electrode tab connected to the positive electrode plate and the negative electrode plate and formed by stacking a plurality of metal plates.

2. The electrode assembly of claim 1, wherein the electrode tab is formed by stacking a plurality of metal plates having the same length.

3. The electrode assembly of claim 1, wherein the electrode tab is formed by stacking a plurality of metal plate having different length
wherein one side of the electrode tab has a thickness greater than that of the other side of the electrode tab.

4. The electrode assembly of claim 3, wherein the metal plates comprise:
a first metal plate having a length; and
a second metal plate stacked on the first metal plate and having a length less than that of the first metal plate.

5. The electrode assembly of claim 4, wherein the length of the second metal plate is less than 1/2 of the length of the first metal plate.

6. The electrode assembly of claim 4, wherein the metal plates further comprise a third metal plate stacked on the second metal plate and having a length less than or equal to that of the second metal plate.

7. The electrode assembly of claim 3, wherein, in the electrode tab, the plurality of metal plates having the different lengths are disposed so that ends of the metal plates match each other at one side of the electrode tab.

8. The electrode assembly of claim 3, wherein one side of the electrode tab, which has a relatively thick thickness, is connected to the positive electrode plate or the negative electrode plate.

9. The electrode assembly of claim 3, wherein the other side of the electrode tab, which has a relatively thin thickness, is connected to the positive electrode plate or the negative electrode plate.

10. An electrode tab connected to a positive electrode plate or a negative electrode plate and formed by stacking a plurality of metal plates.

11. The electrode tab of claim 10, wherein the plurality of metal plates have the same length.

12. The electrode tab of claim 10, wherein the plurality of metal plates have different lengths,
wherein one side of each of the metal plates has a length greater than that of the other side thereof.

13. A secondary battery comprising:
the electrode assembly of claim 1;
a battery case configured to accommodate the electrode assembly therein; and
a cap assembly coupled to an upper portion of the battery case.
